# EUROPEAN PATENT APPLICATION

(11) **EP 2 336 626 A1**
(43) Date of publication of application: **22.06.2011**
(21) Application number: 09180089.6
(22) Date of filing: 21.12.2009
(51) Int. Cl.: F16M 11/24

(54) **Monitor support**

(71) Applicant: Gigazone International Co., Ltd., Taipei 231, Taiwan, Xindian 231 (TW); Giga-Byte Technology Co., Ltd., Taipei-Hsien 231 (TW)
(72) Inventor: Lin, Po-Yu, 231, Hsin-tien (TW)
(74) Representative: Schwerbrock, Florian

(57) **Abstract**

A monitor supportor (10) includes a first sliding element (11), a second sliding element (12) and a positioning element (13). The first sliding element (11) includes a housing (111), an accommodating space (112) and a track (113). The second sliding element (12) includes an outer member (121) and an inner member (122) connected to each other. The outer member (121) is slidably connected to the track (113). The inner member (122) is slidably installed in the accommodating space (112). The positioning element (13) includes a first end (131) fixed on the housing (111) and a second (132) end contained in the accommodating space. When a force is exerted to move the first sliding element (11) and the second sliding element (12) to a predetermined position, the positioning element (13) provides a cushion force. After removing the force, the first sliding element (11) and the second sliding element (12) stop at the predetermined position by the cushion force.

## Description

### BACKGROUND OF THE INVENTION

### Field of the Invention

The prevent invention generally relates to a monitor supportor, and more particular, a monitor supportor combining a radiator.

### Description of the Related Art

With the trend of microminiaturizing electronic products, the size of current notebook computer is light-weight and tiny and it could result uncomfortable eyes to the users under long time operation. To prevent that, users can connect their notebook computer to a larger external monitor. Because the evolution of monitor is more and more light-weight and the invention of electronic paper also puts in mass production, it is a must to improve radiators to connect big size monitor directly.

### BRIEF SUMMARY OF THE INVENTION

The present invention, providing a monitor supportor for connecting a radiator and an external monitor, includes a first sliding element, a second element, and a positioning element. Said first sliding element comprises a housing, an accommodating space, and a track. Space inside said housing forms said accommodating space, and said track is set on said housing. Said second sliding element comprises an outer member and an inner member, and said outer member and said inner member connect each other. Said outer member is slidable to connect said track; and said inner member is movable and installed in said accommodating space. Said positioning element comprises a first end and a second end. Said first end is fixed at inside said housing, and said second end is set in said inner member. When exert a force to make said first sliding element and said second sliding element move to a predetermined position, said positioning element provides a cushion force. After removing the force, said first sliding element and said sliding element will stop at said predetermined position by said cushion force.

Please note that said positioning element is a roll-able spring.

Please note that said inner member comprises an accommodating part and an open. When said first sliding element and said second sliding element move relatively, the distance between said first end and said second end of said positioning element will change. Wherein said first end of said positioning element passes through said open and to be fixed at inside of said housing. When said distance becomes short, part of said positioning element will roll up in said accommodating part.

Please note that said inner member is U shape.

Please note that said monitor support further comprises a fixing fixture for fixing said first end of said positioning element at said housing.

Please note that said monitor support further comprises a monitor connecter installed on said housing.

Please note that said housing comprises a first surface and a second surface. Said first face is opposite to said second surface. Said monitor connecter is on said first surface and said track is on said second surface.

Please note that said monitor connecter comprises a plural of fastening units for connecting an external monitor.

Please note that monitor support further comprises a plural of lock attachments, and said monitor connecter comprises a plural of pinholes. Using said lock attachments to fix said monitor connecter onto said first sliding element.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow and the accompanying drawings which are given by way of illustration only, and thus are not limitative of the present invention, and wherein
FIG. 1 is plan schematic view of a monitor supportor in accordance with an embodiment of the present invention;
FIG. 2 is a plan schematic view of a combination of a monitor supportor and a radiator in accordance with an embodiment of the present invention;
FIG. 3 is a profile view of a monitor supportor that a second sliding element is at bottom dead center relative to a first sliding element in accordance with the present invention;
FIG. 4 is a profile view of a monitor supportor that a second sliding element is at top dead center relative to a first sliding element in accordance with the present invention;
FIG. 5 is a plan schematic view of a monitor supportor connecting with an external monitor and a radiator, and of a second sliding element is at bottom dead center relative to a first sliding element in accordance with the present invention; and
FIG. 6 is a plan schematic view of a monitor supportor connecting with an external monitor and a radiator and of a second sliding element is at top dead center relative to a first sliding element in accordance with the present invention.

### DETAILED DESCRIPTION OF THE INVENTION

The present invention will now be described in detail with reference to the accompanying drawings, wherein the same reference numerals will be used to identify the same or similar elements throughout the several views. It should be noted that the drawings should be viewed in the direction of orientation of the reference numerals.

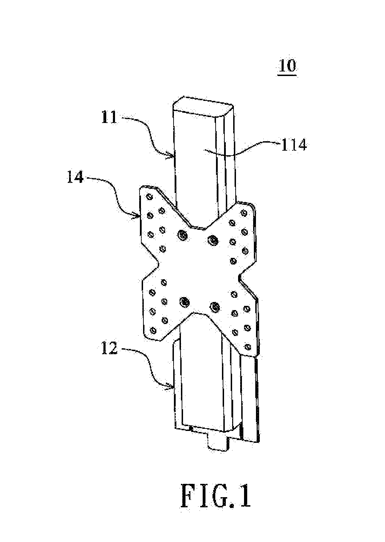

FIG. 1 is a plan schematic view of a monitor supportor in accordance with an embodiment of the present invention.

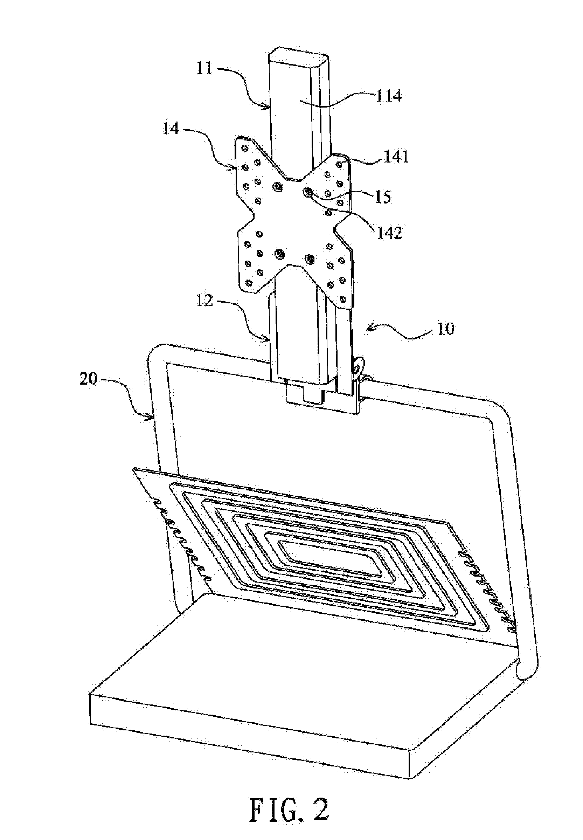

FIG. 2 is a plan schematic view of a combination of a monitor supportor and a radiator in accordance with an embodiment of the present invention.

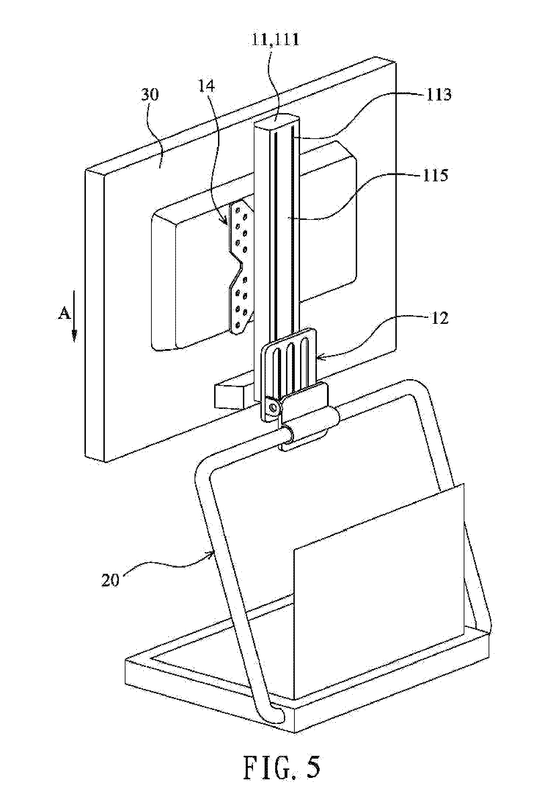

Referring to FIG. 1 and FIG. 2, a monitor supportor 10 connects a radiator 20 and an external monitor 30 (please refer to FIG. 5), wherein said monitor supportor 10 comprising a first sliding element 11, a second sliding element 12, a positioning element 13 (please refer to PIG. 3), and a monitor connecter 14. Said second sliding element 12 and said first sliding element 11 can move relatively for adjusting the height of said external monitor 30 (please refer to FIG. 5). Please note that said second sliding element 12 connects to said radiator 20; and said monitor connecter 14 comprises a plural of fastening units 141 for connecting said external monitor 30 (please refer to FIG. 5). Besides, said monitor supportor 10 also comprises a plural of lock attachments 15, and said monitor connecter 14 also comprises a plural of pinholes 142. In the embodiment in accordance with the present invention, said lock attachments 15 are use to fix said monitor connecter 14 onto said first sliding element 11.

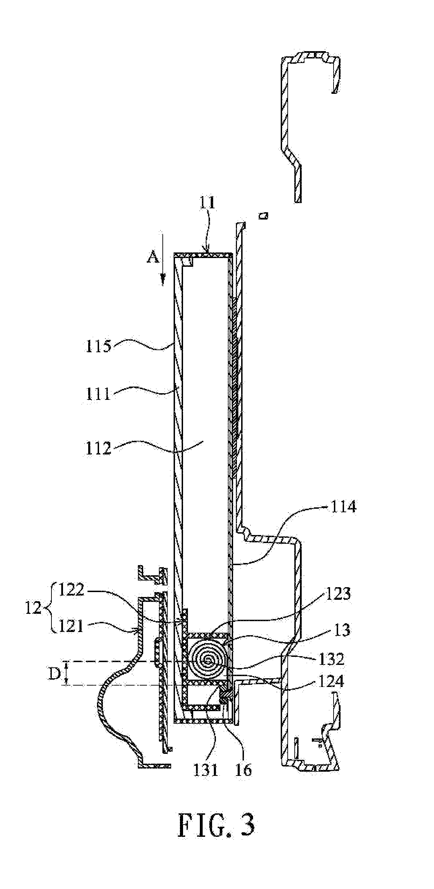

FIG. 3 is a profile view of a monitor supportor that a second sliding element is at bottom dead center relative to a first sliding element in accordance with the present invention;

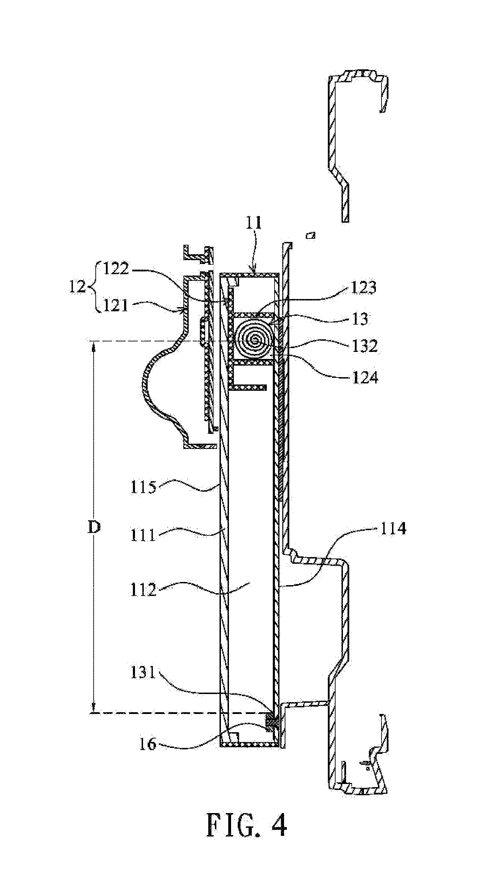

FIG. 4 is a profile view of a monitor supportor that a second sliding element is at top dead center relative to a first sliding element in accordance with the present invention;

FIG. 5 is a plan schematic view of a monitor supportor connecting with an external monitor and a radiator, and of a second sliding element is at bottom dead center relative to a first sliding element in accordance with the present invention; and

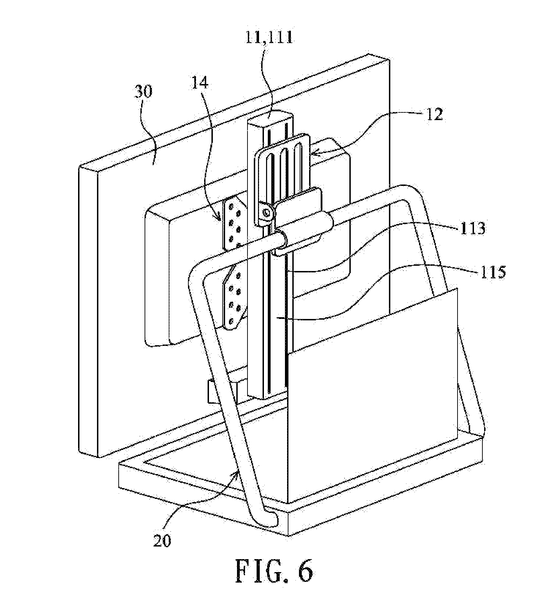

FIG. 6 is a plan schematic view of a monitor supportor connecting with an external monitor and a radiator and of a second sliding element is at top center relative to a first sliding element in accordance with the present invention.

Referring to FIG. 3 to FIG. 6, said first sliding element 11 comprises a housing 111, an accommodating space 112, and a track 113 (FIG. 5), wherein said housing 111 comprising a first surface 114 and a second surface 115 which they are opposite to each other. Said monitor connecter 14 is on said first surface 114 (please refer to FIG. 1), and said track 113 is on said second surface 115 of said housing 111.

Said second sliding element 12 comprises an outer member 121 and an inner member 122. Said outer member 121 and said inner member 122 connect each other. Said outer member 121 is slidable to connect said track 113 and movable on track 113. Said inner member 122 is movable and installed in said accommodating space 112. Said inner member 122 connects said outer member 121 together, so therefore the movement of outer member 121 will drive said inner member 122 to move in said accommodating space 112.

Said positioning element 13 comprises a first end 131 and a second end 132, and a distance D formed between said first end 131 and second end 132. Said first end 131 is fixed in said housing 111. Said second end 132 is set on said inner member 122 in which comprises an accommodating part 123 and an open 124. Please note that said inner member 122 is U shape in the embodiment in accordance with the present invention. Said first end 131 of said positioning element 13 passes through said open 124 and be fixed at said housing 111. And, said monitor supportor 10 further comprises a fixing fixture 16. Said first end 131 of said positioning element 13 is fixed at inside of said housing 111 with said fixing fixture 16.

.When said second sliding element 12 and first sliding element 11 move relatively to shorten said distance D (illustrated as FIG. 3), said positioning element 13 is a roll-able spring and rolls up shortened part in said accommodating part 123.

If want to move said external monitor 30 in FIG. 5 down to a predetermined position (as illustrated in FIG. 6), users must exert a downward force directed as arrow A. Position in FIG. 5 is corresponding with positions in FIG. 3, so, when said external monitor 30 is at the highest position, said second sliding element 12 is at bottom dead center relative to said first sliding element 11, and meantime said distance D is minimum. When said external monitor 30 receives a downward force to act (illustrated as arrow A), said first sliding element 11 will follow it to move downward. Thus, said second sliding element 12 moves relatively to top of said first sliding element 11 (illustrated as FIG. 4), and meantime said distance D between said first end 131 and second end 132 increases. And because said first end 131 of said positioning element 13 is fixed at inside of said housing 111, said first sliding element 11 moving downward drives said positioning element 13 in said accommodating part 123 to pass through said open 124 and to be stretched out. As said positioning element 13 in accommodating part 123 provides cushion power after being stretched out; therefore, after removing said downward force, said first sliding element 11 and second sliding element 12 will stop at predetermined position by said cushion force. Please note that said predetermined position in accordance with present invention happens to that said second sliding element 12 is at top dead center relative to said sliding element 11. If predetermined position is at that said second sliding element 12 is between bottom dead center and top dead center relative to said sliding element 11, said cushion force also can stop it.

To sum up, the monitor supportor in accordance with the present invention can connects a radiator and an external monitor. Even if users need to operate the notebook computer for long, users can utilize the radiator and the monitor supportor to connect the large-size external monitor directly. Furthermore, the monitor support in accordance with the present invention can adjust the height of the external monitor is more convenient to use.

While the invention has been described by way of example and in terms of the preferred embodiment, it is to be understood that the invention is not limited to the disclosed embodiments, and it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A monitor supportor installed on a radiator is used for connecting said radiator and an external monitor, comprising: a first sliding element comprises a housing, an accommodating space shaped from inside space of said housing, and a track set on said housing; a second sliding element has an outer member and an inner member connecting with each other. Said outer member connects said track slidably, and said inner member is movable set in said accommodating space; and a positioning element, comprising a first end and a second end, wherein said first end fixed in said housing and said second end set in said inner member; When a force exerts to move said first sliding element and said second sliding element to a predetermined position, said positioning element provides a cushion force. After removing said force, said first sliding element and said second sliding element will stop at said predetermined position by said cushion force.

2. A positioning element in said monitor supportor according to claims 1 is a roll-able spring.

3. A monitor supportor according to claim 2, wherein said inner member comprises an accommodating part and an open. When said first sliding element and said second sliding element move relatively, the distance between said first end and said second end of said positioning element will change. Said first end of said positioning element passes through said open and is fixed inside of said housing. When said distance becomes short, part of said positioning element will roll up in said accommodating part.

4. An inner member of said monitor supportor according to claim 3 is U shape.

5. A monitor supportor according to claim 1, wherein comprises a fixing fixture for fixing said first end of said positioning element onto said housing.

6. A monitor supportor according to claim 1, wherein comprises a monitor connecter installed on said housing.

7. A monitor supportor according to claim 6, wherein said housing comprises a first surface and a second surface. Said first surface is opposite to said second surface. Said monitor connecter is installed on said first surface and said track is on said second surface.

8. A monitor supportor according to claim 6, wherein said monitor connecter comprises a plural of fastening units for connecting said external monitor.

9. A monitor supportor according to claim 6, wherein further comprises a plural of lock attachments. And said monitor connecter comprises a plural of pinholes. Using said lock attachments to fix said monitor connecter onto said first sliding element

10. A monitor supportor according to claim 1, wherein said second sliding element connects said radiator.
